# FASCICULE DE BREVET EUROPEEN

(11) **EP 0 543 688 B1**
(45) Date de publication et mention de la délivrance du brevet: **24.05.1995**
(21) Numéro de dépôt: 92402872.3
(22) Date de dépôt: 21.10.1992
(51) Int. Cl.: A01F 25/20

(54) **Dispositif de coupe pour désileuse**
Silofutterschneider
Silage cutter

(30) Priorité: 30.10.1991 FR 9113391
(43) Date de publication de la demande: 26.05.1993
(73) Titulaire: ETABLISSEMENTS LUCAS G. (Société Anonyme), F-85130 La Verrie (FR)
(72) Inventeur: Lucas, Gérard, F-85130 La Verrie (FR); Retaillaud, Jean-Claude, F-85130 La Verrie (FR)
(74) Mandataire: Keib, Gérard

(56) Documents cités:
- EP-A- 0 338 653
- FR-A- 2 644 668

## Description

La présente invention concerne un dispositif de coupe pour désileuse.

Les désileuses comprennent une benne et à l'arrière de celle-ci un dispositif de coupe comprenant un panneau mobile dont un bord inférieur est tranchant pour couper, par descente du panneau, une tranche d'ensilage dans un front d'ensilage, tranche qui est ensuite poussée dans la benne par l'ouverture arrière de celle-ci.

Pour faciliter la coupe de la tranche, certains dispositifs de coupe pour désileuse comprennent un disque rotatif de coupe latérale qui est placé en regard d'une paroi latérale du panneau. Le disque rotatif complète par une coupe latérale la coupe frontale assurée par le bord inférieur tranchant du panneau. La tranche d'ensilage se détache ainsi beaucoup plus facilement du reste de l'ensilage. Ceci minimise l'effort d'arrachement à exercer sur la tranche pour l'amener à l'intérieur de la benne, et minimise par conséquent les contraintes subies par le matériel. D'autre part, le front d'ensilage est laissé plus net, ce qui est favorable à sa bonne conservation.

Un tel dispositif de coupe est décrit dans le FR-A-2 644 668 de la demanderesse. Habituellement, le disque déborde de part et d'autre du panneau car l'axe de rotation du disque de coupe latérale est situé en arrière de la face intérieure du panneau afin d'accoupler aisément le disque à un moteur, généralement hydraulique, également situé en arrière de la face intérieure du panneau. Comme le dispositif de coupe est en général monté à l'arrière d'une benne, on considère que la direction "vers l'arrière" est celle qui est dirigée vers la matière ensilée située au-delà du panneau mobile. La partie du disque débordant vers l'arrière du panneau effectue une découpe inutile dans le front d'ensilage,

avec les inconvénients suivants :
- la cohésion du front d'ensilage restant est diminuée ;
- la surface d'ensilage exposée à l'air est augmentée, ce qui est défavorable à la bonne conservation de l'ensilage ;
- une énergie inutile est consommée pour effectuer cette découpe.

En outre, le positionnement classique du disque lui empêche généralement de descendre jusqu'au bord inférieur tranchant du panneau. Il reste donc un talon non coupé latéralement à la base du front d'ensilage. Ce talon est arraché lorsque le panneau est ensuite poussé vers la benne de la désileuse. Cet arrachement est également consommateur d'énergie et peut affecter la cohésion du front d'ensilage, notamment lorsque celui-ci est relativement vertical.

Un but de la présente invention est de supprimer les inconvénients ci-dessus des dispositifs de coupe connus de manière à améliorer la netteté du front d'ensilage et à éviter les consommations d'énergie inutiles.

L'invention propose ainsi un dispositif de coupe pour désileuse, comprenant un panneau mobile monté à une extrémité arrière d'au moins un bras de manoeuvre, des moyens de coupe frontale situés le long d'un bord inférieur du panneau, et au moins un disque rotatif de coupe latérale disposé sur au moins un côté du panneau transversalement au bord inférieur du panneau, caractérisé en ce que sensiblement la totalité du disque est située du coté opposé au front d'ensilage par rapport au plan de coupe frontale défini par les moyens de coupe frontale.

Grâce à la position avancée du disque, il n'y a pratiquement aucune découpe latérale inutile en arrière du panneau. Le front d'ensilage restant après la coupe et le chargement d'une tranche est donc net. En outre, pour une tranche d'épaisseur donnée, coupée de façon plus nette, on peut sensiblement diviser par deux le diamètre du disque par rapport à un dispositif de coupe antérieur, ce qui entraîne une réduction de la consommation d'énergie. Autrement dit, pour une consommation d'énergie donnée lors de la coupe, on peut extraire une tranche d'ensilage d'épaisseur sensiblement double par rapport à un dispositif antérieur. Or il est d'un grand intérêt pour l'utilisateur qu'une machine ayant des performances données consomme aussi peu de puissance que possible. Outre l'économie directement réalisée, ceci permet d'exploiter la machine avec un tracteur de puissance plus faible.

En outre, comme le disque ne dépasse pas à l'arrière du panneau, les risques de blessure par ce disque, lorsque la machine est au repos, sont éliminés.

Dans une version préférée de l'invention, une partie inférieure de la périphérie du disque est située sensiblement au même niveau qu'une arête tranchante des moyens de coupe frontale.

On élimine ainsi le talon non coupé latéralement, restant à la base du front d'ensilage avec un dispositif de coupe antérieur.

D'autres particularités et avantages de l'invention ressortiront encore de la description ci-après.

Aux dessins annexés, donnés à titre d'exemples non limitatifs :
- la figure 1 est une vue en élévation d'une désileuse distributrice en cours de fonctionnement ;
- la figure 2 est une vue en perspective du dispositif de coupe de la désileuse de la figure 1 ;
- la figure 3 est une vue partielle en coupe selon le plan III indiqué à la figure 2 ;
- la figure 4 est une vue partielle en élévation selon la direction A indiquée à la figure 2 ;
- la figure 5 est une vue partielle selon la direction V indiquée à la figure 4 ; et
- la figure 6 est une vue schématique prise selon la direction VI indiquée à la figure 2, avec arrachement partiel.

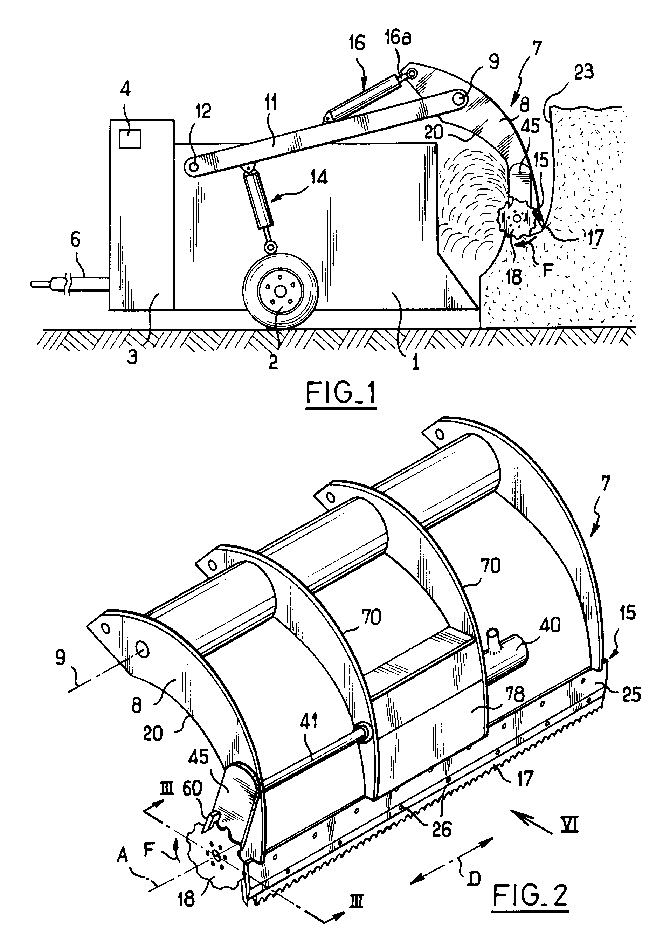

Dans l'exemple représenté à la figure 1, la désileuse distributrice comprend une benne 1 montée sur roues 2. L'avant de la benne 1 est délimité par un dispositif démêleur 3 capable de démêler les végétaux contenus dans la benne 1 et de les faire sortir par soufflage à travers l'une ou l'autre de deux trappes latérales 4 situées de chaque côté de la machine pour distribuer les végétaux dans les mangeoires ou dans les litières des animaux. La désileuse distributrice peut être attelée à un tracteur au moyen d'une flèche d'attelage 6.

A son extrémité arrière, la benne 1 est ouverte mais peut être fermée par un panneau 7 formant un poussoir tranchant qui est articulé aux extrémités arrière de deux bras de manoeuvre longitudinaux 11 selon un axe d'articulation horizontal 9 parallèle au bord inférieur 15 du panneau 7. Les bras de manoeuvre 11 s'étendent vers l'avant de part et d'autre de la benne 1. Ils sont montés oscillants autour d'un axe horizontal 12 voisin du démêleur 3. Un vérin 14 actionne les bras 11 autour de l'axe 12. Un autre vérin 16 actionne le panneau 7 autour de l'axe horizontal 9.

Le dispositif selon l'invention comprend des moyens de coupe frontale 17 le long du bord inférieur horizontal 15 du panneau 7. Les moyens de coupe frontale comprennent une ou plusieurs lames 17 qui s'étendent horizontalement selon la direction D du bord inférieur 15 du panneau 7.

Le panneau 7 fait partie d'un dispositif de coupe comprenant en outre, sur au moins un côté 8 du panneau 7, un disque rotatif de coupe latérale 18 disposé transversalement par rapport au bord inférieur 15 du panneau 7.

Le panneau 7 a une forme générale incurvée, en vue de profil. Sa face intérieure -ou avant- 20, orientée vers l'intérieur de sa courbure, est agencée pour pousser l'ensilage découpé vers l'avant lorsque le vérin 16, dont une extrémité 16a est montée sur le panneau 7 au-delà de son axe d'articulation 9, est actionné à l'extension. Le profil incurvé du panneau 7 permet de réduire l'angle d'attaque des lames 17 dans le silo par rapport à la verticale lorsque les bras 11 sont levés et le vérin 16 rétracté (situation représentée à lafigure 1) et facilite ainsi la pénétration de lames. Ce profil incurvé facilite en outre le travail de désilage en permettant de couper des tranches d'épaisseur pratiquement constante en actionnant le vérin 14 sans nécessiter de corrections par le vérin 16 pour redresser le front de coupe.

Pour effectuer un désilage, on actionne à plusieurs reprises le panneau 7 de haut en bas au moyen du vérin 14. En même temps, les lames 17 sont actionnées en va-et-vient horizontal pour couper frontalement des tranches successives dans le front d'ensilage 23, tandis que le disque 18 est actionné en rotation selon la flèche F pour couper latéralement lesdites tranches du côté où elles sont rattachées au reste de l'ensilage. Lorsqu'une tranche a ainsi été coupée, on actionne le vérin 16 à l'extension pour ramener la tranche qui vient d'être coupée vers l'intérieur de la benne 1 et pousser les tranches précédemment coupées vers l'avant de celle-ci.

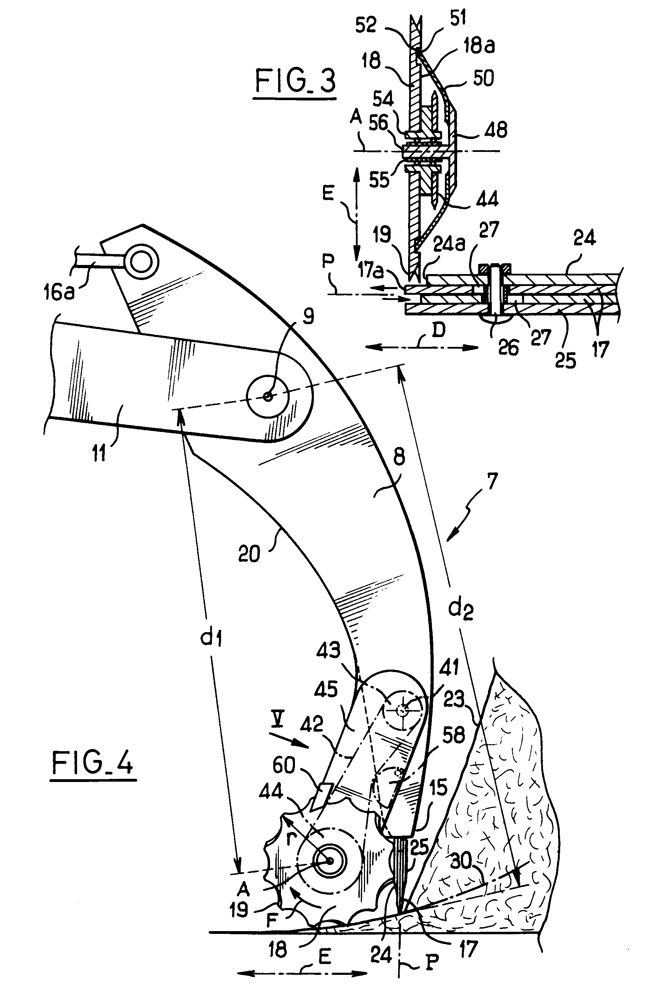

Comme le montrent les figures 2 à 6, les lames 17 sont adossées directement l'une à l'autre entre un support plan 24 fixé le long du bord inférieur 15 du panneau 7 et une plaque 25 parallèle au support 24. L'empilement du support 24, des lames 17 et de la plaque 25 est maintenu par des vis 26 traversant des trous oblongs 27 prévus dans les lames 17 pour permettre leur va-et-vient parallèle au bord inférieur 15 du panneau 7. Les lames 17 définissent un plan de coupe frontale P indiqué aux figures 3 et 4.

Conformément à l'invention, sensiblement la totalité du disque de coupe latérale 18 est située en avant du plan de coupe frontale P. Dans l'exemple représenté, l'axe de rotation A du disque 18 est parallèle au bord inférieur 15 du panneau 7 et le disque 18 est entièrement situé en avant du plan de coupe frontale P.

Pour assurer une coupe d'angle parfaite, la périphérie tranchante 19 du disque 18 est pratiquement tangente au plan de coupe frontale P défini par les lames 17 (figures 3 et 4).

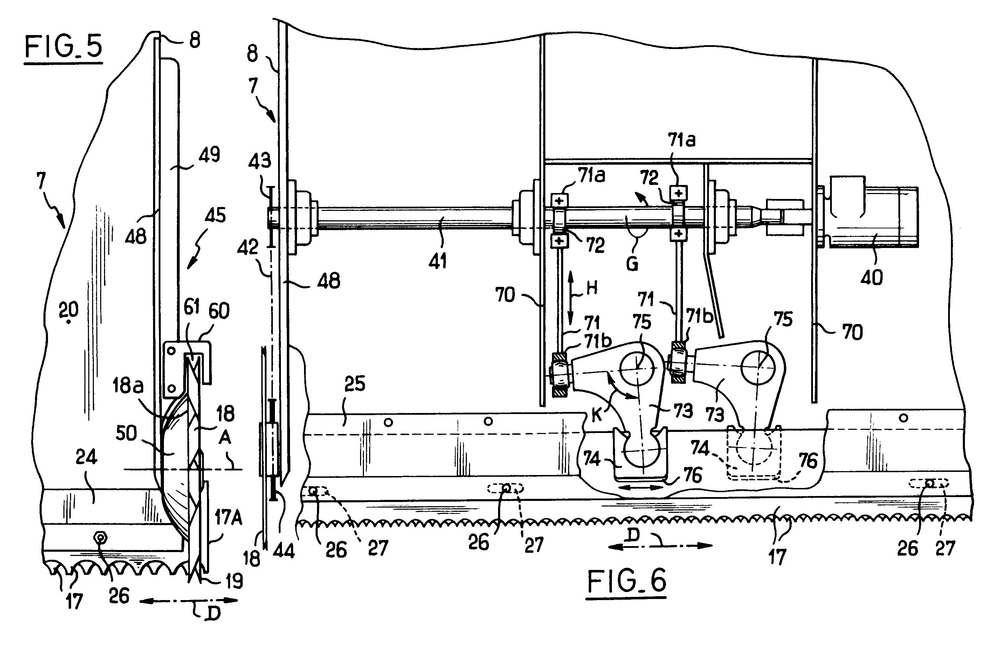

La figure 3 montre la disposition du disque 18 au voisinage des extrémités des lames 17. Relativement à la direction D du bord inférieur 15 du panneau 7, la périphérie 19 du disque 18 est située au-delà de l'extrémité 24a du support 24 et en deçà de l'extrémité 17a d'une lame 17 adjacente au disque 18 lorsque cette lame 17 est dans la position extérieure extrême de son mouvement de va-et-vient (voir aussi figure 5). Relativement à la direction horizontale E perpendiculaire à la direction D du bord inférieur du panneau, la périphérie 19 du disque 18 est située au droit du support 24 (figures 3 et 4).

Suivant une particularité avantageuse, la partie inférieure de la périphérie 19 du disque 18 est située sensiblement au même niveau que l'arête tranchante des lames 17 (figure 4). De préférence, la distance d2 entre l'axe d'articulation 9 du panneau 7 et l'arête tranchante des lames 17 est égale à la somme du rayon r du disque 18 et de la distance d1 entre l'axe d'articulation 9 du panneau 7 et l'axe de rotation A du disque 18. Ainsi, lorsqu'on déploie le vérin 16 pour ramener la tranche d'ensilage coupée dans la benne 1, le panneau 7 pivote autour de l'axe 9 de façon telle que l'arête tranchante des lames 17 balaie le même arc de cercle 30 que le bord inférieur du disque 18. Par conséquent, au moment où on pousse l'ensilage découpé vers l'avant, il ne se produit pratiquement aucun arrachement de matières non préalablement découpées. L'énergie nécessaire pour pousser l'ensilage dans la benne 1 est donc minimisée, en l'absence de talon non coupé, et le front d'ensilage restant peut être parfaitement net.

Dans l'exemple de réalisation préféré de l'invention représenté aux dessins, les lames 17 et le disque de coupe latérale 18 sont mis en mouvement par un même moteur hydraulique 40 disposé en arrière de la face intérieure 20 du panneau 7, et relié à un système de commande hydraulique non représenté. Le moteur 40 entraîne en rotation un arbre moteur 41 parallèle à la direction D du bord inférieur 15 du panneau et situé en arrière de la face intérieure 20 du panneau (figure 2).

Pour l'entraînement du disque 18, on prévoit des premiers moyens de transmission constitués, dans l'exemple représenté, par un organe souple tel qu'une chaîne 42 montée sur deux couronnes 43, 44. La chaîne 42 et les couronnes 43, 44, représentées en traits mixtes à la figure 4, sont logées dans un carter fermé 45 de forme aplatie situé entre le disque 18 et le côté 8 du panneau 7 comportant le disque 18. Le carter 45 est délimité intérieurement par une plaque 48 s'étendant le long du côté 8 du panneau transversalement à sa face intérieure 20, et extérieurement par un capot 49 recouvrant la plaque 48 et les moyens de transmission 42, 43, 44 (figures 4 et 5).

La partie inférieure du carter 45, adjacente au disque 18, est délimitée par un élément en forme de cloche 50. La périphérie de l'élément 50 comporte une lèvre annulaire 51 qui s'engage dans une gorge annulaire complémentaire 52 portée par la face intérieure 18a du disque 18 située en regard de la face intérieure 20 du panneau 7 (figure 3). Le côté de l'élément en forme de cloche 50 opposé au disque 18 est rendu solidaire, par exemple par soudage, de la plaque 49, elle-même solidaire du panneau 7.

L'élément en forme de cloche 50, empêché de tourner avec le disque 18, évite que des végétaux coupés vivement viennent s'emmêler et se comprimer autour de l'axe du disque, comme exposé dans le FR-A-2 644 668 de la demanderesse.

En outre, l'élément en forme de cloche 50 définit un logement pour la couronne 44 liée en rotation au disque 18. Un agencement possible de la couronne 44 est représenté à la figure 3 : le disque 18 et la couronne 44 sont fixés sur la bague extérieure 54 d'un roulement à billes dont la bague intérieure 55 est fixée à un doigt 56 porté par la plaque 48 et définissant l'axe de rotation A du disque 18.

L'autre couronne 43 des premiers moyens de transmission est montée sur une extrémité de l'arbre moteur 41 dépassant dans le carter 45 au-delà de la plaque 48. Le sens de rotation G (figure 6) de l'arbre moteur 41 et les premiers moyens de transmission 42, 43, 44 assurent que le disque 18 tourne dans un sens F tel que son bord inférieur ait une vitesse instantanée dirigée vers l'avant (figures 1, 2 et 4). Les dimensions des couronnes 43, 44 sont choisies pour obtenir la démultiplication désirée entre le vitesses de rotation de l'arbre 41 et du disque 18.

A l'intérieur du carter 45 est en outre logé un élément tendeur 58 représenté en traits mixtes à la figure 4. Cet élément 58 est une came dont une face convexe appuie sur la chaîne 42, et qu'on peut fixer en une position réglable sur la plaque 48 pour tendre de façon réglable la chaîne 42.

Le capot 49 du carter 45 comporte un bec 60 visible aux figures 2, 4 et 5. Le bec 60 comporte une fente 61 située dans le plan du disque 18. Lors de la rotation du disque 18, sa périphérie 19 passe dans la fente 61, ce qui débarasse le disque 18 des matières pouvant rester agglutinées sur sa denture. En outre, le côté du bec 60 adjacent au carter 45 obture l'intervalle entre le carter 45 et la face intérieure 18a du disque 18 et évite ainsi que des végétaux viennent s'emmêler dans cet intervalle.

Pour l'entraînement des lames 17, on prévoit des seconds moyens de transmission situés en arrière de la face intérieure 20 du panneau. Ces seconds moyens de transmission sont logés entre deux nervures 70 du panneau 7 perpendiculaires à la direction D de son bord inférieur 15, et protégés par un capot 78 (visible à la figure 2 mais non représenté à la figure 6).

Pour chaque lame 17, les seconds moyens de transmission comprennent une bielle 71 dont une extrémité 71a est articulée sur un excentrique 72 solidaire de l'arbre moteur 41 et des moyens de renvoi 73, 74 montés entre l'autre extrémité 71b de la bielle 71 et la lame 17 pour transformer le mouvement oscillant de la bielle 71 résultant de la rotation de l'arbre moteur 41 en un mouvement de va-et-vient de la lame 17 parallèlement au bord inférieur 15 du panneau. Ces moyens de renvoi comprennent un levier coudé 73 et une came 74. Le levier coudé 73 est articulé au niveau de son coude sur un axe 75 solidaire du panneau 7 et perpendiculaire au plan P des lames 17. L'une des branches du levier coudé 73 a son extrémité articulée par une rotule à l'extrémité 71b de la bielle et l'autre branche a une extrémité en forme de disque engagée dans un logement circulaire complémentaire de la came 74.

La came 74 a une forme générale en U dont la partie centrale reçoit l'extrémité en forme de disque du levier coudé 73. La came 74 a une forme plane et est située dans le même plan que la lame 17 dont elle commande le mouvement. Elle est placée dans un évidement complémentaire 76 prévu dans la lame 17 et ayant des côtés perpendiculaires à la direction du mouvement de la lame. Lorsque le moteur 40 entraîne l'arbre 41, les excentriques 72 font osciller les bielles 71 comme l'indique la double flèche H, ce qui fait osciller en rotation les leviers 73 comme l'indique la double flèche K. Cette oscillation déplace en va-et-vient les cames 74 et les lames 17 parallèlement à la direction souhaitée D, avec un léger soulèvement des cames 74 non communiqué aux lames 17. Les excentriques 72 sont diamétralement opposés sur l'arbre moteur 41, de sorte que les lames 17 ont des mouvements de va-et-vient de sens contraires.

Bien qu'on ait décrit l'invention en référence à un exemple de réalisation particulier, on comprendra que diverses modifications peuvent être apportées à cet exemple sans sortir du cadre de l'invention.

## Revendications

1. Dispositif de coupe pour désileuse, comprenant un panneau mobile (7) monté à une extrémité arrière d'au moins un bras de manoeuvre (11), des moyens de coupe frontale (17) situés le long d'un bord inférieur (15) du panneau (7), et au moins un disque rotatif de coupe latérale (18) disposé sur au moins un côté (8) du panneau (7) transversalement au bord inférieur (15) du panneau, caractérisé en ce que sensiblement la totalité du disque (18) est située du coté opposé au front d'ensilage par rapport au plan de coupe frontale (P) défini par les moyens de coupe frontale (17).

2. Dispositif conforme à la revendication 1, caractérisé en ce que la périphérie (19) du disque (18) est sensiblement tangente au plan de coupe frontale (P).

3. Dispositif conforme à l'une des revendications 1 ou 2, caractérisé en ce qu'une partie inférieure de la périphérie (19) du disque (18) est située sensiblement au même niveau qu'une arête tranchante des moyens de coupe frontale (17).

4. Dispositif conforme à l'une des revendications 1 à 3, caractérisé en ce que le panneau (7) est articulé sur le bras de manoeuvre (11) autour d'un axe d'articulation (9) parallèle au bord inférieur (15) du panneau, et en ce que la distance (d2) entre l'axe d'articulation (9) du panneau et une arête tranchante des moyens de coupe frontale (17) est sensiblement égale à la somme du rayon (r) du disque (18) et de la distance (d1) entre l'axe d'articulation (9) du panneau et l'axe de rotation (A) du disque.

5. Dispositif conforme à l'une des revendications 1 à 4, caractérisé en ce qu'il comprend un arbre moteur (41) situé en arrière d'une face intérieure (20) du panneau (7) agencée pour pousser vers l'avant des matières découpées, et des moyens de transmission (42, 43, 44) montés entre l'arbre moteur (41) et le disque (18) pour entraîner celui-ci en rotation.

6. Dispositif conforme à la revendication 5, caractérisé en ce que les moyens de transmission (42, 43, 44) sont logés dans un carter fermé (45) de forme aplatie situé entre le disque (18) et le côté (8) du panneau comportant le disque (18).

7. Dispositif conforme à la revendication 6, caractérisé en ce qu'une partie inférieure du carter (45) est délimitée par un élément en forme de cloche (50) solidaire du panneau (7) et comportant une lèvre annulaire (51) orientée vers le disque (18) et en ce qu'une face (18a) du disque (18) située en regard de la face intérieure (20) du panneau (7) comporte une gorge annulaire (52) dans laquelle s'engage ladite lèvre annulaire (51).

8. Dispositif conforme à la revendication 7, caractérisé en ce que les moyens de transmission comprennent une couronne (44) liée en rotation au disque (18) et en ce que cette couronne (44) est logée entre le disque (18) et l'élément en forme de cloche (50).

9. Dispositif conforme à l'une des revendications 6 à 8, caractérisé en ce qu'il comprend des moyens (60) solidaires du carter (45) et qui obturent un intervalle entre le carter (45) et une face (18a) du disque (18) située en regard de la face intérieure (20) du panneau (7).

10. Dispositif conforme à la revendication 9, caractérisé en ce que lesdits moyens (60) solidaires du carter (45) définissent une fente (61) dans laquelle passe la périphérie (19) du disque (18).

11. Dispositif conforme à l'une des revendications 6 à 10, caractérisé en ce que les moyens de transmission comprennent un organe de transmission souple (42) monté sur deux couronnes (43, 44), à savoir une couronne (43) tournant avec l'arbre moteur (41) et une couronne (44) tournant avec le disque (18).

12. Dispositif conforme à la revendication 11, caractérisé en ce qu'un élément tendeur (58) est monté dans le carter (45) pour tendre de façon réglable l'organe de transmission souple (42).

13. Dispositif conforme à l'une des revendications 5 à 12, caractérisé en ce que l'arbre moteur (41) et les moyens de transmission (42, 43, 44) sont agencés pour que le sens de rotation (F) du disque (18) soit tel que le bord inférieur du disque (18) ait une vitesse instantanée dirigée sensiblement vers l'avant.

14. Dispositif conforme à l'une des revendications 5 à 13, caractérisé en ce que les moyens de coupe frontale comprennent au moins une lame (17) mobile en va-et-vient parallèlement au bord inférieur (15) du panneau (7), et en ce que la lame (17) est mise en mouvement par des seconds moyens de transmission (71, 72, 73, 74) montés entre la lame (17) et l'arbre moteur (41).

15. Dispositif conforme à la revendication 14, caractérisé en ce que les seconds moyens de transmission comprennent une bielle (71) ayant une extrémité (71a) montée sur un excentrique (72) solidaire de l'arbre moteur (41) et des moyens de renvoi (73, 74) montés entre l'autre extrémité (71b) de la bielle (71) et la lame (17) pour transformer le mouvement oscillant de la bielle (71) résultant de la rotation de l'arbre moteur (41) en un mouvement de va-et-vient de la lame (17) parallèlement au bord inférieur (15) du panneau (7).

16. Dispositif conforme à l'une des revendications 5 à 15, caractérisé en ce que l'arbre moteur (41) est sensiblement parallèle au bord inférieur (15) du panneau (7).

17. Dispositif conforme à l'une des revendications 5 à 16, caractérisé en ce que l'arbre moteur (41) est entraîné en rotation par un moteur hydraulique (40) situé en arrière de la face intérieure (20) du panneau (7).

18. Dispositif conforme à l'une des revendications 1 à 17, caractérisé en ce que les moyens de coupe frontale comprennent au moins une lame (17) montée sur un support (24) s'étendant le long du bord inférieur (15) du panneau (7), la lame (17) étant mobile par rapport au support (24) selon un mouvement de va-et-vient parallèle au bord inférieur (15) du panneau (7) et en ce que, au voisinage des moyens de coupe frontale (17), la périphérie (19) du disque (18) est située, relativement à la direction (D) du bord inférieur (15) du panneau, au-delà d'un extrémité (24a) du support (24) adjacente au disque (18) et en-deçà d'une extrémité (17a) de la lame (17) adjacente au disque (18) lorsque la lame (17) est dans une position extrême de son mouvement de va-et-vient.

19. Dispositif conforme à la revendication 18, caractérisé en ce qu'au voisinage des moyens de coupe frontale (17), la périphérie (19) du disque (18) est située sensiblement au droit du support (24) relativement à une direction (E) transversale au bord inférieur (15) du panneau.

20. Dispositif conforme à l'une des revendications 1 à 19, caractérisé en ce que le panneau (7) a une forme générale incurvée, la face intérieure (20) du panneau (7), orientée vers l'intérieur de la courbure du panneau (7), étant agencée pour pousser vers l'avant des matières découpées.

## Claims

1. An ensilage extractor cutting device, comprising a movable panel (7) mounted at one rear end of at least one control arm (11), front cutting means (17) situated along a bottom edge (15) of the panel (7), and at least one side cutting rotary disc (18) disposed on at least one side (8) of the panel (7) transversely to the bottom edge (15) of the panel, characterised in that substantially all the disc (18) is situated on the side remote from the ensilage face with respect to the front cutting plane (P) defined by the front cutting means (17).

2. A device according to claim 1, characterised in that the periphery (19) of the disc (18) is substantially tangential to the front cutting plane (P).

3. A device according to claim 1 or 2, characterised in that a bottom part of the periphery (19) of the disc (18) is situated substantially at the same level as a cutting edge of the front cutting means (17).

4. A device according to any one of claims 1 to 3, characterised in that the panel (7) is articulated on the control arm (11) about a pivot axis (9) parallel to the bottom edge (15) of the panel, and in that the distance (d2) between the panel pivot axis (9) and a cutting edge of the front cutting means (17) is substantially equal to the sum of the radius (r) of the disc (18) and the distance (d1) between the panel pivot axis (9) and the axis of rotation (A) of the disc.

5. A device according to any one of claims 1 to 4, characterised in that it comprises a drive shaft (41) situated rearwardly of an inner surface (20) of the panel (7) adapted to push the cut material forward, and transmission means (42, 43, 44) mounted between the drive shaft (41) and the disc (18) to drive the latter in rotation.

6. A device according to claim 5, characterised in that the transmission means (42, 43, 44) are housed in a closed casing (45) of flattened shape situated between the disc (18) and the panel side (8) having the disc (18).

7. A device according to claim 6, characterised in that a bottom part of the casing (45) is defined by a bell-shaped element (50) connected to the panel (7) and comprising an annular lip (51) directed towards the disc (18) and in that a surface (18a) of the disc (18) situated opposite the inner surface (20) of the panel (7) is formed with an annular groove (52) in which the said annular lip (51) engages.

8. A device according to claim 7, characterised in that the transmission means comprise a crown wheel (44) connected for rotation to the disc (18) and in that said crown wheel (44) is housed between the disc (18) and the bell-shaped element (50).

9. A device according to any one of claims 6 to 8, characterised in that it comprises means (60) connected to the casing (45) and closing a gap between the casing (45) and a surface (18a) of the disc (18) situated opposite the inner surface (20) of the panel (7).

10. A device according to claim 9, characterised in that the said means (60) connected to the casing (45) define a slot (61) which receives the periphery (19) of the disc (18).

11. A device according to any one of claims 6 to 10, characterised in that the transmission means comprise a flexible transmission member (42) mounted on two crown wheels (43, 44), namely a crown wheel (43) rotating with the drive shaft (41) and a crown wheel (44) rotating with the disc (18).

12. A device according to claim 11, characterised in that a tensioning element (58) is mounted in the casing (45) for adjustable tensioning of the flexible transmission member (42).

13. A device according to any one of claims 5 to 12, characterised in that the drive shaft (41) and the transmission means (42, 43, 44) are arranged so that the direction of rotation (F) of the disc (18) is such that the bottom edge of the disc (18) has an instantaneous speed directed substantially forwardly.

14. A device according to any one of claims 5 to 13, characterised in that the front cutting means comprise at least one blade (17) adapted to reciprocate parallel to the bottom edge (15) of the panel (7) and in that the blade (17) is moved by second transmission means (71, 72, 73, 74) mounted between the blade (17) and the drive shaft (41).

15. A device according to claim 14, characterised in that the second transmission means comprise a link (71) having one end (71a) mounted on an eccentric (72) connected to the drive shaft (41) and transmission means (73, 74) mounted between the other end (71b) of the link (71) and the blade (17) to convert the oscillatory movement of the link (71) resulting from the rotation of the drive shaft (41) into a reciprocating movement of the blade (17) parallel to the bottom edge (15) of the panel (17).

16. A device according to any one of claims 5 to 15, characterised in that the drive shaft (41) is substantially parallel to the bottom edge (15) of the panel (7).

17. A device according to any one of claims 5 to 16, characterised in that the drive shaft (41) is rotated by a hydraulic motor (40) situated rearwardly of the inner surface (20) of the panel (7).

18. A device according to any one of claims 1 to 17, characterised in that the front cutting means comprise at least one blade (17) mounted on a support (24) extending along the bottom edge (15) of the panel (7), the blade (17) being movable relatively to the support (24) in a reciprocating movement parallel to the bottom edge (15) of the panel (7) and in that near the front cutting means (17) the periphery (19) of the disc (18) is situated, relatively to the direction (D) of the bottom edge (15) of the panel, beyond one end (24a) of the support (24) adjacent the disc (18) and within one end (17a) of the blade (17) adjacent the disc (18) when the blade (17) is in an end position of its reciprocating movement.

19. A device according to claim 18, characterised in that near the front cutting means (17) the periphery (19) of the disc (18) is situated substantially level with the support (24) relatively to a direction (E) extending transversely of the bottom edge (15) of the panel.

20. A device according to any one of claims 1 to 19, characterised in that the panel (7) has a general curved shape, the inner surface (20) of the panel (7) directed towards the interior of the curvature of the panel (7) being adapted to push the cut material forward.

## Patentansprüche

1. Schneidvorrichtung für Silage, mit einem bewegbaren Schild (7), das an einem hinteren Ende von wenigstens einem Betätigungsarm (11) angebracht ist, sowie Mitteln (17) zum frontalen Schneiden, die entlang einem unteren Rand (15) des Schildes (7) angeordnet sind, und wenigstens einer sich drehenden Scheibe (18) zum seitlichen Schneiden, die an wenigstens einer Seite (8) des Schildes (7) quer zum unteren Rand (15) des Schildes angeordnet ist, dadurch gekennzeichnet, daß im wesentlichen die gesamte Scheibe (18) bezüglich der von den Mitteln (17) zum frontalen Schneiden bestimmten Ebene (P) des frontalen Schneidens auf der zur Vorderseite der Silage entgegengesetzten Seite angeordnet ist.

2. Vorrichtung nach Anspruch 1, dadurch gekennzeichnet, daß der Umfang (19) der Scheibe (18) im wesentlichen tangential zur Ebene (P) des frontalen Schneidens ist.

3. Vorrichtung nach einem der Ansprüche 1 und 2, dadurch gekennzeichnet, daß ein unterer Abschnitt des Umfanges (19) der Scheibe (18) im wesentlichen auf derselben Höhe wie eine Schneidkante der Mittel (17) zum frontalen Schneiden angeordnet ist.

4. Vorrichtung nach einem der Ansprüche 1 bis 3, dadurch gekennzeichnet, daß das Schild (7) an dem Betätigungsarm (11) um eine zu dem unteren Rand (15) des Schildes parallele Gelenkachse (9) angelenkt ist und daß der Abstand (d2) zwischen der Gelenkachse (9) des Schildes und einer Schneidkante der Mittel (17) zum frontalen Schneiden im wesentlichen gleich der Summe aus dem Radius (r) der Scheibe (18) und dem Abstand (d1) zwischen der Gelenkachse (9) des Schildes und der Drehachse (A) der Scheibe ist.

5. Vorrichtung nach einem der Ansprüche 1 bis 4, dadurch gekennzeichnet, daß sie eine Antriebswelle (41) umfaßt, die hinter einer Innenseite (20) des Schildes (7) angeordnet ist, die dafür vorgesehen ist, geschnittenes Material nach vorne zu drücken, sowie Übertragungsmittel (42, 43, 44), die zwischen der Antriebswelle (41) und der Scheibe (18) angeordnet sind, um diese in Drehung zu versetzen.

6. Vorrichtung nach Anspruch 5, dadurch gekennzeichnet, daß die Übertragungsmittel (42, 43, 44) in einem geschlossenen Gehäuse (45) mit abgeflachter Form angeordnet sind, das zwischen der Scheibe (18) und der die Scheibe (18) aufweisenden Seite (8) des Schildes angeordnet ist.

7. Vorrichtung nach Anspruch 6, dadurch gekennzeichnet, daß ein unterer Abschnitt des Gehäuses (45) von einem glockenförmigen Element (50) abgegrenzt ist, das fest mit dem Schild (7) verbunden ist und eine zur Scheibe (18) gerichtete, ringförmige Lippe (51) aufweist, und daß eine gegenüber der Innenseite (20) des Schildes (7) liegende Seite (18a) der Scheibe (18) eine ringförmige Nut (52) aufweist, in welche die ringförmige Lippe (51) eingreift.

8. Vorrichtung nach Anspruch 7, dadurch gekennzeichnet, daß die Übertragungsmittel einen mit der Scheibe (18) drehfest verbundenen Kranz (44) aufweisen und daß dieser Kranz (44) zwischen der Scheibe (18) und dem glockenförmigen Element (50) angeordnet ist.

9. Vorrichtung nach einem der Ansprüche 6 bis 8, dadurch gekennzeichnet, daß sie fest mit dem Gehäuse (45) verbundene Mittel (60) umfaßt, die einen Zwischenraum zwischen dem Gehäuse (45) und einer gegenüber der Innenseite (20) des Schildes (7) liegenden Seite (18a) der Scheibe (18) verschließen.

10. Vorrichtung nach Anspruch 9, dadurch gekennzeichnet, daß die fest mit dem Gehäuse (45) verbundenen Mittel (60) einen Schlitz (61) bilden, durch den der Umfang (19) der Scheibe (18) läuft.

11. Vorrichtung nach einem der Ansprüche 6 bis 10, dadurch gekennzeichnet, daß die Übertragungsmittel ein nachgiebiges Übertragungsorgan (42) umfassen, das auf zwei Kränzen (43, 44) angebracht ist, nämlich auf einem sich mit der Antriebswelle (41) drehenden Kranz (43) und einem sich mit der Scheibe (18) drehenden Kranz (44).

12. Vorrichtung nach Anspruch 11, dadurch gekennzeichnet, daß in dem Gehäuse (45) ein Spannelement (58) angebracht ist, um das nachgiebige Übertragungsorgan (42) in einstellbarer Weise zu spannen.

13. Vorrichtung nach einem der Ansprüche 5 bis 12, dadurch gekennzeichnet, daß die Antriebswelle (41) und die Übertragungsmittel (42, 43, 44) derart ausgebildet sind, daß die Drehrichtung (F) der Scheibe (18) eine solche ist, daß der untere Rand der Scheibe (18) eine im wesentlichen nach vorne gerichtete Momentangeschwindigkeit hat.

14. Vorrichtung nach einem der Ansprüche 5 bis 13, dadurch gekennzeichnet, daß die Mittel zum frontalen Schneiden wenigstens eine Klinge (17) umfassen, die parallel zum unteren Rand (15) des Schildes (7) hin- und hergehend bewegbar ist, und daß die Klinge (17) von zweiten Übertragungsmitteln (71, 72, 73, 74) in Bewegung versetzt wird, die zwischen der Klinge (17) und der Antriebswelle (41) angebracht sind.

15. Vorrichtung nach Anspruch 14, dadurch gekennzeichnet, daß die zweiten Übertragungsmittel eine Pleuelstange (71) aufweisen, deren eines Ende (71a) auf einem fest mit der Antriebswelle (41) verbundenen Exzenter (72) gelagert ist, sowie Umlenkmittel (73, 74), die zwischen dem anderen Ende (71b) der Pleuelstange (71) und der Klinge (17) angebracht sind, um die aus der Drehung der Antriebswelle (41) resultierende oszillierende Bewegung der Koppelstange (71) in eine zum unteren Rand (15) des Schildes (7) parallele, hin- und hergehende Bewegung der Klinge (17) zu transformieren.

16. Vorrichtung nach einem der Ansprüche 5 bis 15, dadurch gekennzeichnet, daß die Antriebswelle (41) im wesentlichen parallel zum unteren Rand (15) des Schildes (7) ist.

17. Vorrichtung nach einem der Ansprüche 5 bis 16, dadurch gekennzeichnet, daß die Antriebswelle (41) von einem Hydraulikmotor (40) in Drehung versetzt wird, der hinter der Innenseite (20) des Schildes (7) angeordnet ist.

18. Vorrichtung nach einem der Ansprüche 1 bis 17, dadurch gekennzeichnet, daß die Mittel zum frontalen Schneiden wenigstens eine Klinge (17) aufweisen, die an einem sich entlang dem unteren Rand (15) des Schildes (7) erstreckenden Träger (24) angebracht ist, wobei die Klinge (17) bezüglich des Trägers (24) in einer zum unteren Rand (15) des Schildes (7) parallelen, hin- und hergehenden Bewegung bewegbar ist, und daß der Umfang (19) der Scheibe (18) in der Nähe der Mittel zum frontalen Schneiden relativ zur Richtung (D) des unteren Randes (15) des Schildes jenseits von einem an die Scheibe (18) angrenzenden Ende (24a) des Trägers (24) und diesseits von einem an die Scheibe (18) angrenzenden Ende (17a) der Klinge (17) angeordnet ist, wenn die Klinge (17) sich in einer Extremstellung ihrer hin- und hergehenden Bewegung befindet.

19. Vorrichtung nach Anspruch 18, dadurch gekennzeichnet, daß in der Nähe der Mittel (17) zum frontalen Schneiden der Umfang (19) der Scheibe (18) bezüglich einer Richtung (E), die quer zu dem unteren Rand (15) des Schildes liegt, im wesentlichen auf der Höhe des Trägers (24) liegt.

20. Vorrichtung nach einem der Ansprüche 1 bis 19, dadurch gekennzeichnet, daß das Schild (7) eine allgemein gekrümmte Form aufweist, wobei die zum Inneren der Krümmung des Schildes (7) gerichtete Innenseite (20) des Schildes (7) dafür ausgebildet ist, geschnittenes Material nach vorne zu drücken.
